# EUROPEAN PATENT APPLICATION

(11) **EP 2 600 497 A1**
(43) Date of publication of application: **05.06.2013**
(21) Application number: 11191730.8
(22) Date of filing: 02.12.2011
(51) Int. Cl.: H02K 1/27

(54) **Rotor**

(71) Applicant: Siemens Aktiengesellschaft, 80333 München (DE)
(72) Inventor: Le Besnerais, Jean, 59370 Mons en Baroeul (FR)

(57) **Abstract**

Rotor (1), particularly for a generator of a wind turbine, comprising a number of circumferentially adjacently disposed magnet elements (2), wherein the freely exposed surface (S) of at least one magnet element (2) runs asymmetrically relative to the longitudinal axis and/or transverse axis of the magnet element (2).

## Description

The present invention relates to a rotor, particularly for a generator of a wind turbine, comprising a number of circumferentially adjacently disposed magnet elements.

The general setup and principle of electric machines such as generators or the like is widely known. Thereby, a rotor is rotatably supported relative to a stator, whereby the rotation of the rotor, i.e. the rotation of respective circumferentially adjacently disposed magnet elements of the rotor, relative to the stator leads to an induction of electric current within the stator or respective stator windings of the stator, respectively.

It is also known that respective magnet elements may lead to harmonics responsible for noise and vibration effects. It has been shown that respective harmonics are essentially based on the symmetrical, particularly rectangular, shape of respective magnet elements.

In order to reduce respective noise and vibration effects, it has been proposed to shift respective magnet elements so as to avoid repetitive magnetic excitation. Another approach to reduce respective noise and vibration effects is to concertedly shape respective magnet elements so as to reduce respective components of radial and tangential magnetic flux densities involved in magnetic forces. Aside, providing of respective magnet elements as radially layered structures of different magnetic or magnetisable material has been suggested. In this way, the use of costly rare earth materials can be reduced.

Yet, the known concepts of magnet elements of rotors are regularly not satisfying regarding the generation of respective harmonics and the use of costly magnetic or magnetisable material.

Thus, it is the object of the present invention to provide an improved rotor.

This is inventively achieved by a rotor as initially described, wherein the freely exposed surface of at least one magnet element runs asymmetrically relative to the longitudinal axis and/or transverse axis of the magnet element.

The inventive principle suggests a rotor having a number of circumferentially adjacently disposed magnet elements, whereby at least one, preferably all, magnet elements have an asymmetric shape relative to a geometrical axis of the respective magnet element. The asymmetrical shape of the magnet element can be best understood when regarding the course of the freely exposed surface of the magnet element, which course runs asymmetrically relative to the longitudinal axis and/or transverse axis of the magnet element, i.e. in axial and/or circumferential direction of the rotor. As a rule, arbitrary shapes of the magnet element, i.e. arbitrary courses of the freely exposed surface relative to the longitudinal axis and/or transverse axis of the magnet element are possible under the premise of the magnet element having an asymmetrically shape.

The inventive principle is based on the finding that the magnet field, which is generated during operation of an electric machine, passes through respective magnet elements in inhomogeneous, non-uniform manner when the rotor rotates in a given direction of rotation. Thereby, the magnetic flux density in a first portion of the magnet element oriented in direction of rotation of the rotor is usually higher in comparison to a circumferentially adjacent portion of the magnet element. In other words, each respective magnet element has a gradient or distribution of magnetic flux density during operation of the electric machine, i.e. when the rotor rotates relative to a stator.

The usual gradient or distribution of magnetic flux density within a respective magnet element is particularly considered when asymmetrically shaping the magnet element, i.e. the dimensions of the portion of the magnet element usually experiencing a lower magnetic flux density are changed or reduced in asymmetric manner relative to the portion of the magnet element oriented in direction of rotation of the rotor which magnet element usually experiences a higher magnetic flux density.

The freely exposed surface of the magnet element refers to the surface which faces the air gap and/or at least one circumferentially successive magnet element of the rotor. Since the magnet elements are preferably attached to a base plate, with the base plate being attached to the rotor, the term "freely exposed surface" generally relates to all respective surfaces of the magnet element which are not in contact with a respective base plate.

The longitudinal axis and transverse axis of the magnet element are defined as axes of the magnet element extending in axial and circumferential direction of the rotor, whereby the longitudinal axis is usually defined as an axis extending in axial direction of the rotor and the transverse axis is defined an axis extending in circumferential direction of the rotor.

Hence, in a basic embodiment of the invention when theoretically dividing a respective magnet element in two circumferentially or axially adjacently disposed portions, the two portions are differently shaped under the premise of the two portions being asymmetrically shaped relative to each other, i.e. do not share a common axis of geometry. Hence, the two portions have different cross-sections. If need be, the two portions may also have different volumes.

The same applies to the case, when theoretically dividing the magnet element in more than two circumferentially or axially adjacently disposed portions.

When emanating from a given point of the freely exposed surface of the magnet element, particularly the centre point of the freely exposed surface, the course of the surface towards at least two borders of the magnet element may be different in direction of the longitudinal axis and/or transverse axis of the magnet element. Hence, when regarding the outer or inner circumference of the rotor, i.e. when regarding at the top of the respective circumference of the rotor holding the magnet elements and defining an arbitrary point, the course of the surface is different in at least two different directions towards the circumferential and/or axial borders of the magnet element. Hence, the magnet element comprises at least two differently shaped portions, possibly, but not necessarily halves, which portions do not share a common axis of symmetry.

Thus, the course of the freely exposed surface of the magnet element running from a given point of the freely exposed surface in circumferential direction towards the left border of the magnet element may differ from the course of the freely exposed surface running from the same given point of the surface of the magnet element in circumferential direction towards the right border of the magnet element, for instance. Additionally or alternatively, the course of the freely exposed surface of the magnet element running from another or the same given point of the freely exposed surface in axial direction towards the front border (front face) of the magnet element may differ from the course of the freely exposed surface running from the other or the same given point of the surface of the magnet element in axial direction towards the back border (back face) of the magnet element, for instance.

The course of the freely exposed surface generally comprises respective slopes, local or global extrema such as minima and/or maxima and/or inflection points, etc.

Thereby, the course of the freely exposed surface is preferably different towards opposing borders of the magnet element in direction of the longitudinal axis and/or transverse axis of the magnet element. Thus, the course of the freely exposed surface running from a central point of the surface of the magnet element in transverse i.e. circumferential direction towards the left border of the magnet element preferably differs from the course of the freely exposed surface running from the central point of the surface of the magnet element in transverse i.e. circumferential direction towards the right border of the magnet element. Additionally or alternatively, the course of the freely exposed surface of the magnet element running from the central point of the freely exposed surface of the magnet element in longitudinal i.e. axial direction towards the front border of the magnet element may differ from the course of the freely exposed surface running from the central point of the surface of the magnet element in longitudinal i.e. axial direction towards the back border of the magnet element, for instance.

According to another inventive embodiment of the invention, when emanating from the centre point of the freely exposed surface of the magnet element, the course of the surface of the magnet element may run with a curved and/or inclined and/or stepped shape towards a first border of the magnet element and may run with a differently curved and/or inclined and/or stepped shape towards a second, particularly opposing, border of the magnet element. In such a manner, the shapes of the magnet element i.e. respective portions of the freely exposed surface running in opposite transverse i.e. axial and/or longitudinal i.e. circumferential direction are more concrete. Of course, respective mixtures of curved and/or inclined and/or stepped shapes i.e. respective hybrid shapes are feasible as well. Each respective course of the freely exposed surface of a magnet element may be at least partially provided with a curved and/or inclined and/or stepped shape, whereby the premise of the respective portions of the magnet element, which are geometrically defined by their respective freely exposed surfaces or courses of freely exposed surfaces, being asymmetrical relative to each other is maintained.

According to a further inventive embodiment, it is possible that, when emanating from the centre point of the freely exposed surface of the magnet element, the course of the freely exposed surface of the magnet element runs with a curved and/or inclined and/or stepped shape in direction of rotation of the rotor towards a circumferential border of the magnet element and with a differently curved and/or inclined and/or stepped shape in opposite direction towards the opposing circumferential border of the magnet element. Thereby, when regarding cross-sectional views of the respective magnet element, the portion of the magnet element having the larger cross-section is preferably but not necessarily oriented in direction of rotation of the rotor.

The magnet element is preferably a permanent magnet, particularly comprising at least one magnetic or magnetisable material, particularly based on a rare earth element. Hence, the magnet element has immanent magnetic properties. Thus, the permanent magnet is preferably based on a lanthanide element and/or scandium and/or yttrium or respective compositions or mixtures of the named.

It is thinkable that the magnet element comprises at least two differently shaped magnet element sections built of different magnetic or magnetisable material. The respective magnet element sections are preferably circumferentially and/or axially adjacently disposed. Advantageously, the magnet element section experiencing the least magnetic flux density during operation of the rotor or a respective electric machine comprising the rotor is built of a material of comparatively low magnetic or magnetisable properties. Hence, the magnet element may only be provided with good magnetic properties where they are needed during operation of the rotor i.e. an electric machine comprising the rotor.

The rotor may be segmented in at least two rotor segments each comprising at least one magnet element, whereby the rotor segments are adapted to build the rotor when assembled. In such a manner, advantages regarding handling, service, and repair of the rotor are given since the parts to be handled are smaller and lighter. Since the rotor preferably has the shape of a ring, the rotor segments may have the shape of respective ring segments.

The present invention further relates to a generator, particularly for a wind turbine, comprising a rotor as described above. The generator is preferably used as a direct drive generator in a wind turbine.

Moreover, the present invention relates to a wind turbine, particularly a direct drive wind turbine, comprising at least one aforementioned generator. The wind turbine may be ready to be used in offshore-applications.

In the following, the invention is described in detail as reference is made to the figures, whereby:
- Fig. 1: shows a principle perspective partial view of a rotor according to an exemplary embodiment;
- Fig. 2 - 5: show a principle cut views of exemplary embodiments of magnet elements attached to a rotor;
- Fig. 6: shows a principle perspective partial view of an exemplary embodiment of a magnet element;
- Fig. 7: shows a principle cut partial view of an inventive magnet element with indicated magnetic flux lines; and
- Fig. 8: shows a principle cut partial view of a conventional magnet element with indicated magnetic flux lines.

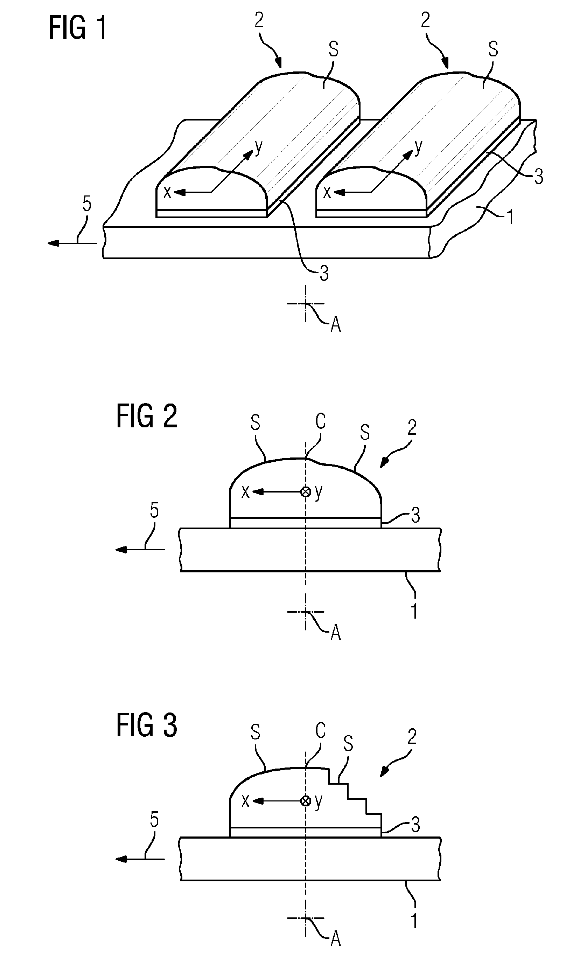

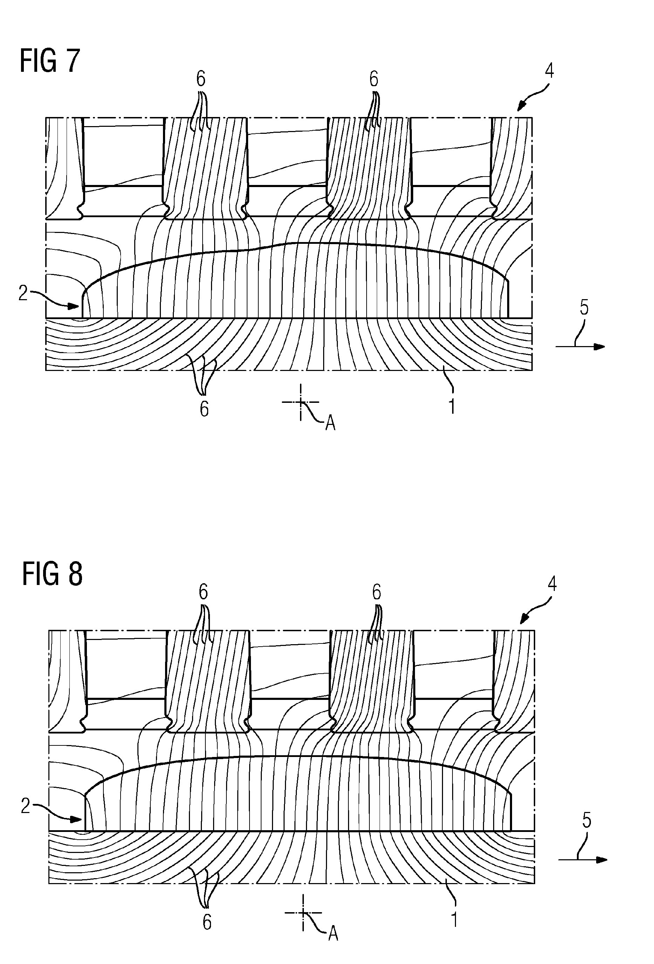

Fig. 1 shows a principle perspective partial view of a rotor 1 according to an exemplary embodiment. The rotor 1 is part of a generator of a direct drive wind turbine. The rotor 1, having respective circumferentially adjacently disposed magnet elements 2 attached thereto, rotates relative to a stator 4 (cf. fig. 7, 8) during operation of the generator (cf. the rotational axis A). The magnet elements 2 are attached to respective base plates 3, which base plates 3 are firmly attached to the inner or outer circumference of the rotor 1 in dependency of the configuration of the generator i.e. if the generator has an outer rotor 1 - inner stator configuration or an outer stator - inner rotor 1 configuration. The direction of rotation of the rotor 1 during operation of the generator is indicated by arrow 5. The rotor 1 may be segmented in at least two ring-segment like rotor segments each comprising at least one magnet element 2, with the rotor segments being adapted to build the ring-like rotor 1 when assembled.

The magnet elements 3 are permanent magnets, i.e. built of a permanent magnetic material, particularly based on a rare earth element. The freely exposed surface S of a respective magnet element 2 is the surface not contacting the base plate 3, i.e. facing the air gap between the rotor 1 and the stator 4 as well as further circumferentially adjacently disposed magnet elements 2.

As is discernible from fig. 1, the freely exposed surface S of each magnet element 2 runs asymmetrically relative to the longitudinal axis (y-axis) of each magnet element 2. Hence, the slope of the course of the freely exposed surface S of the magnet element 2 differs in direction to the left and right circumferential borders of the magnet element 2 i.e. in circumferential direction. Hence, each respective magnet element 2 is provided with an asymmetric shape relative to the longitudinal axis (y-axis) of the magnet element 2. Generally, it is possible that the freely exposed surface S of a respective magnet element 2 runs asymmetrically relative to its longitudinal axis (y-axis) and/or transverse axis (x-axis).

The inventive principle is more easily to comprehend when regarding fig. 2 showing a principle cross-sectionally cut view of an exemplary embodiment of a magnet element 2 attached to a rotor 1. The magnet elements 2 depicted in fig. 2 are similar to the ones shown in fig. 1. As is discernible, when emanating from a given point of the freely exposed surface S of the magnet element 2, particularly the centre point C of the freely exposed surface S, the course of the freely exposed surface S towards the circumferential borders of the magnet element 2 is different in direction of the transverse axis (x-axis) of the magnet element 2, whereby the transverse axis (x-axis) is oriented in circumferential direction or direction of rotation of the rotor 1 (cf. fig. 1 arrow 5), respectively. In other words, the course of the freely exposed surface S of the magnet element 2 is different towards circumferentially opposing borders of the magnet element 2 in direction of the transverse axis (x-axis) of the magnet element 2.

Particularly, when emanating from the centre point C of the freely exposed surface S of the magnet element 2, the course of the freely exposed surface S of the magnet element 2 runs with a curved shape towards the left circumferential border of the magnet element 2 and runs with a differently curved shape towards the right circumferential, i.e. opposing, border of the magnet element 2. Hence, the magnet element 2 comprises a nun-uniform cross-sectional shape since the cross-section of the left portion of the magnet element 2 being defined by the course of the freely exposed surface S running from the centre point P to the left border of the magnet element 2 differs from the cross-section of the right portion of the magnet element 2 being defined by the course of the freely exposed surface S running from the centre point P to the right border of the magnet element 2.

The fig. 3 - 5 show principle cross-sectionally cut views of exemplary embodiments of magnet elements 2 attached to a rotor 1. The essential difference to the embodiment shown in fig. 2 lies in the concrete shape of the magnet elements 2.

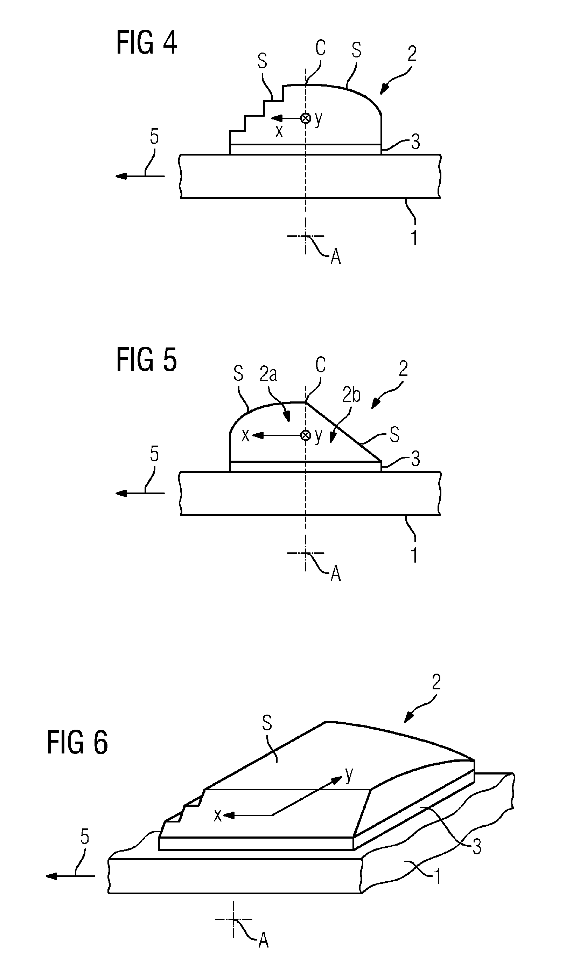

The magnet element 2 according to the embodiment of fig. 3, has a left portion defined by the course of its freely exposed surface S from the centre point C towards its left border and a right portion defined by the course of its freely exposed surface S from the centre point C towards its right border, whereby the respective portions have different shapes and consequently cross-sections. Emanating from the centre point C, the course of the freely exposed surface S of the left portion of the magnet element 2 runs inclined, curved and essentially radially inwardly towards the base plate 3, whereas the course of the freely exposed surface S of the right portion of the magnet element 2 runs in steps, i.e. the right portion of the magnet element 2 has a stepped shape. Fig. 4 shows the principle of fig. 3 in an opposite arrangement.

Regarding the magnet element 2 according to the embodiment of fig. 5 and emanating from the centre point C, the left portion of the magnet element 2 defined by the course of its freely exposed surface S from the centre point P towards its left border has a continuously curved course of the freely exposed surface S with different slopes, whereas the right portion of the magnet element 2 defined by the course of its freely exposed surface S from the centre point C towards its right border has an continuously inclined course of the freely exposed surface S with a given slope.

It is to be noted that it is possible that a respective magnet element 2 may comprise at least two differently shaped magnet element sections 2a, 2b in circumferential adjacent arrangement, with the magnet element sections 2a, 2b being built of different magnetic or magnetisable materials. This principle is exemplarily shown with respect to fig. 5. The respective magnet element sections 2a, 2b may differ in the content of rare earth elements, for instance.

As is discernible from fig. 2 - 5, emanating from the centre points P, the respective portions of magnet element 2 defined by the respective courses of the freely exposed surface S to the left and right, do not share a common axis of symmetry leading to the fact that the respective magnet elements 2 are asymmetrically shaped relative to their longitudinal axis (y-axis) in either embodiment.

The same principle is applicable for theoretically dividing respective magnet elements 2 in transverse direction. In this case, the respective portions of the magnet element 2 would be defined by the course of the freely exposed surface S running from the centre point C towards the front or back borders or face sides of the magnet element 2, i. e. in axial direction of the rotor 1.

Of course, hybrid shapes i.e. magnet elements 2 with different courses of the freely exposed surface S in both longitudinal (cf. y-axis) and transverse direction (cf. x-axis) i.e. both circumferential and axial direction of the magnet element 2 are possible as well. An exemplary magnet element 2 having a hybrid shape is shown in fig. 6. Thereby, the left circumferential border of the magnet element 2 is provided with a stepped shape, the right circumferential border of the magnet element 2 is provided with a curved shape declining in longitudinal or axial direction towards the axial back border of the magnet element 2, the axial front border of the magnet element 2 is essentially rectangular, whereas the axial back border of the magnet element 2 is provided with a curved shape declining in transverse direction or circumferential clockwise direction, i.e. oppositely to the direction of rotation (cf. arrow 5).

Moreover, the origin or reference point for respective courses of the freely exposed surface S of respective magnet element 2 does not necessarily have to be the centre point C of the freely exposed surface S of the magnet element 2. Generally, every point of the freely exposed surface S of the magnet element 2 may be used as a respective reference point.

The inventive principle is further explained with regard to fig. 7, 8 showing a principle cut partial views of a magnet element 2 with indicated magnetic flux lines (cf. fig. 7, lines 6) and a principle cut partial view of a conventional magnet element with indicated magnetic flux lines (cf. fig. 8, lines 6). Referring to fig. 8, it is discernible that the magnetic flux density (as indicated by the amount of magnetic flux lines 6) in the portion of the magnet element 2 oriented in direction of rotation of the rotor (cf. arrow 5) relative to the stator 3 is higher in comparison to the portion of the magnet element 2 oriented in the opposite direction. In other words, the right portion of the magnet element 2 experiences a higher magnetic flux density during operation of the generator than the left portion of the magnet element 2.

This finding is considered by the present invention which suggests changing the dimensions of the left portion, i.e. reducing the amount of magnetic material in the left portion by concertedly providing the left portion with a different shape in comparison to the right portion giving rise to an asymmetric shape of the magnet element 2 as a whole (cf. fig. 7). In such a manner, an additional parameter for optimising cogging torque and torque ripple is provided, i.e. a measure to reduce noise and vibration is given. Further, costs of the magnet elements 2 may be reduced due to a possible reduction of magnetic material.

Although the present invention has been described in detail with reference to the preferred embodiment, the present invention is not limited by the disclosed examples from which the skilled person is able to derive other variations without departing from the scope of the invention.

## Claims

1. Rotor (1), particularly for a generator of a wind turbine, comprising a number of circumferentially adjacently disposed magnet elements (2), **characterised in that** the freely exposed surface (S) of at least one magnet element (2) runs asymmetrically relative to the longitudinal axis and/or transverse axis of the magnet element (2).

2. Rotor according to claim 1, wherein emanating from a given point of the freely exposed surface (S) of the magnet element (2), particularly the centre point (P) of the freely exposed surface (S), the course of the freely exposed surface (S) towards at least two borders of the magnet element (2) is different in direction of the longitudinal axis and/or transverse axis of the magnet element (2).

3. Rotor according to claim 2, wherein the course of the freely exposed surface (S) is different towards opposing borders of the magnet element (2) in direction of the longitudinal axis and/or transverse axis of the magnet element (2).

4. Rotor according to claim 2 or 3, wherein, when emanating from the centre point (P) of the freely exposed surface (S) of the magnet element (2), the course of the freely exposed surface (S) of the magnet element (2) runs with a curved and/or inclined and/or stepped shape towards a first border of the magnet element (2) and runs with a differently curved and/or inclined and/or stepped shape towards a second, particularly opposing, border of the magnet element (2).

5. Rotor according to claim 2, wherein, when emanating from the centre point (P) of the freely exposed surface (S) of the magnet element(2), the course of the freely exposed surface (S) of the magnet element (2) runs with a curved and/or inclined and/or stepped shape in direction of rotation of the rotor (1) towards a circumferential border of the magnet element (2) and with a differently curved and/or inclined and/or stepped shape in opposite direction towards the opposing circumferential border of the magnet element (2).

6. Rotor according to one of the preceding claims, wherein the magnet element (2) is a permanent magnet, particularly comprising at least one magnetic or magnetisable material, particularly based on a rare earth element.

7. Rotor according to one of the preceding claims, wherein the magnet element (2) comprises at least two differently shaped magnet element sections (2a, 2b) built of different magnetic or magnetisable materials.

8. Rotor according to one of the preceding claims, wherein the magnet element (2) is attached to a base plate (3), with the base plate (3) being attached to the rotor (1).

9. Rotor according to one of the preceding claims, wherein the rotor (1) is segmented in at least two rotor segments each comprising at least one magnet element (2), whereby the rotor segments are adapted to build the rotor (1) when assembled.

10. Generator, particularly for a wind turbine, comprising a rotor (1) according to one of the preceding claims.

11. Wind turbine, particularly direct drive wind turbine, comprising at least one generator according to claim 10.
